# EUROPÄISCHE PATENTSCHRIFT

(11) **EP 4 196 707 B1**
(45) Veröffentlichungstag und Bekanntmachung des Hinweises auf die Patenterteilung: **19.06.2024**
(21) Anmeldenummer: 21723143.0
(22) Anmeldetag: 21.04.2021
(51) Int. Cl.: F16K 7/06, F16K 27/02, F16K 27/12, E05B 57/00, E05C 19/00

(54) **GEHÄUSE**
HOUSING
BOÎTIER

(30) Priorität: 13.08.2020 DE 102020121357
(43) Veröffentlichungstag der Anmeldung: 21.06.2023
(73) Patentinhaber: Sartorius Stedim Systems GmbH, 34302 Guxhagen (DE)
(72) Erfinder: DITTMANN, Simon, 37081 Göttingen (DE); SCHUBERT, Jan-Eike, 37077 Göttingen (DE); GOHS, Michael, 37081 Göttingen (DE); STAPEL, Yannick, 37083 Göttingen (DE)
(74) Vertreter: Novagraaf International SA
(86) Internationale Anmeldenummer: PCT/EP2021/060389
(87) Internationale Veröffentlichungsnummer: WO 2022/033730

(56) Entgegenhaltungen:
- EP-A1- 0 429 813
- EP-A1- 0 637 707
- EP-A1- 2 841 670
- EP-A2- 2 966 326
- CN-A- 108 050 268
- DE-A1- 2 329 263
- GB-A- 511 435
- US-A- 5 732 994

## Beschreibung

### Gebiet der Erfindung

Die Erfindung bezieht sich auf ein Ventilgehäuse für ein Quetschventil.

### Stand der Technik

Gehäuse mit Schiebedeckel sind dem Fachmann von vielfältigen Anwendungsgebieten her bekannt. Beispielsweise offenbart die CH 43 60 76 A ein derart aufgebautes Spielemagazin. Die AT 24 81 46 B1 offenbart dasselbe Schiebedecke-Prinzip bei einem sog. Diamagazin, d. h. einem Lagerkasten für Diapositive. Die DE 93 030 33 U1 schließlich offenbart eine Warmhaltevorrichtung für Speisen, deren Corpus und deren obere Trägerplatte sich ebenfalls als ein gattungsgemäßes Gehäuse beschreiben lassen. Im Kontext der im Fokus der vorliegenden Erfindung stehenden Anwendung als Verschluss eines Ventilgehäuses für ein Quetschventil hat diese Konstruktionsform eines Gehäuses mit Schiebedeckel besondere Vorteile. Häufig umfasst ein Quetschventil eine einen Gehäusekörper durchsetzende Schlauchführung in die ein medienleitender Schlauch einlegbar ist. Zum Einlegen des Schlauchs muss der Deckel, der die Oberseite des Gehäusekörpers verschließt, geöffnet werden. Im geschlossenen Zustand bildet der Deckel zugleich ein Widerlager, gegen welches der Schlauch beim Vorschub eines gegenüberliegenden, in radialer Richtung verschieblichen Klemmgliedes gepresst wird. Der als Widerlager wirkende Deckel muss dabei vergleichsweise hohe Kräfte in Normalenrichtung aufnehmen. Bei Ausbildung des Deckels als Schiebedeckel werden dies Kräfte über die seitlichen Führungskanten des Deckels und die korrespondierenden Deckel-Führungsnuten des Gehäusekörpers in den Gehäusekörper eingeleitet, wobei die vergleichsweise große Wechselwirkungsfläche zwischen Führungskanten und Deckel-Führungsnuten eine gleichmäßige Druckverteilung ohne Druckspitzen ermöglicht.

Dadurch werden Verkippungen, Verschleiß, etc. zuverlässig vermieden. Dies gilt insbesondere im Vergleich zu einem mittels eines Scharniers am Gehäusekörper angelenkten Klappdeckels, der mittels eines an seiner freien Seitenkante ansetzenden Riegels in Verschlussstellung am Gehäusekörper fixiert werden muss. Die vorgenannten Normalenkräfte auf den Deckel werden allein über besagten Riegel in den Gehäusedeckel eingeleitet, wobei der Riegel deutlichen Kraftspitzen unterworfen ist. Zudem ist bei einem solchen Verschluss nicht immer ohne weiteres erkennbar, ob er korrekt geschlossen ist, sodass die Gefahr besteht, bei Betätigung des Quetschventils den unvollständig verschlossenen Deckel auf und den Schlauch aus dem Gehäuse zu hebeln.

So vorteilhaft ein Schiebedeckel in Bezug auf den sicheren Verschluss des Quetschventils ist, so nachteilig ist er im Hinblick auf die Handhabbarkeit. Häufig ist es schwierig, den Deckel zum Wiederverschließen des Gehäuses mit seinen Führungskanten präzise in die Deckel-Führungsnuten des Gehäusekörpers einzuführen; dies umso mehr, je enger die Führungskanten zur Vermeidung eines Spiels in Normalenrichtung in die Deckel-Führungsnuten eingreifen. Zudem hat ein herkömmlicher Schiebedeckel den Nachteil der Verlierbarkeit bzw. der Verwechselbarkeit bei mehreren eng benachbart angeordneten Quetschventilen einer komplexen Medienleitanlage. Und schließlich muss, um einen Schlauch in den Gehäusekörper einlegen zu können, der herkömmliche Schiebedeckel komplett entfernt werden, wozu es in Längsrichtung benachbart zum Gehäusekörper eines Freiraums von mindestens der Deckellänge bedarf.

Aus der EP 0 429 813 A1 ist es bekannt, die Tür eines Autoklaven in Form eines klappbaren Schiebedeckels auszubilden. Dabei ist der Deckel um eine Achse schwenkbar, die ihrerseits senkrecht zu ihrer Axialrichtung verschieblich am Gerätekörper gelagert ist.

Die WO 2013/162364 A1 offenbart einen Transportwagen mit einer in Scharnieren an einer ersten Seitenwand angeschlagenen Tür. Diese Tür trägt scharnierseitig kurze, vertikal orientierte Achsen, die in an der ersten Seitenwand fixierten Hülsen drehbar und axial verschieblich gelagert sind. Andererseits weist die Tür eine Reihe von Zungen auf, die je nach axialer Schiebestellung der Scharniere mit korrespondierenden Zungen in der gegenüberliegenden, zweiten Seitenwand überlappen bzw. von diesen freikommen.

Ein ähnliches Prinzip, jedoch mit beidseitig angeordneten Zungen, ist im Kontext eines Schaltschranks in der US 2002/0101141 A1 offenbart, wobei die Tür hier axial federvorgespannt ist.

Aus der US 5 732 994 A ist eine gerastert verstellbare Armlehne für ein Kraftfahrzeug bekannt.

Die DE 2 329 263 A offenbart eine Schutztür, die höhenverschieblich in ihren Schwenkscharnieren gelagert ist und Bozen aufweist, die beim Absenken der Tür in deren geschlossenem Zustand in schrägen Führungen laufen, um dadurch ein Anpressen der Tür an ihren Rahmen zu bewirken.

Aus der GB 511 435 A ist eine Tablettenbox mit klappbarem Schiebedeckel bekannt.

Die EP 2 966 326 A2 offenbart ein Schlauchquetschventil mit einem mittels Schraubbozen fixierbaren Deckel.

### Aufgabenstellung

Es ist die Aufgabe der vorliegenden Erfindung, ein Gehäuse eines Quetschventils, derart auszubilden, dass Sicherheit und Handhabbarkeit verbessert werden.

### Darlegung der Erfindung

Diese Aufgabe wird mit den Merkmalen von Anspruch 1 gelöst, d. h. durch ein Ventilgehäuse für ein Quetschventil, umfassend
- einen Gehäusekörper mit einer oberen Öffnung und zwei mit Ihren Oberkanten die Öffnung seitlich begrenzenden, einander gegenüberliegenden Seitenwänden, deren Innenseiten jeweils eine oberkantennahe, längs erstreckte Deckel-Führungsnut tragen, sowie
- einen plattenartigen Deckel mit seitlichen, längs erstreckten Führungskanten, der durch deren Eingriff in die Deckel-Führungsnuten des Gehäusekörpers an diesem schiebegelagert ist,

wobei der Gehäusekörper an der Außenseite einer der Seitenwände einen parallel zu den Deckel-Führungsnuten ausgerichteten Bolzen trägt und der Deckel eine an einer die entsprechende Seitenwand-Oberkante des Gehäusekörpers überkragenden Lasche fixierte, koaxial zu dem Bolzen ausgerichtete Führung trägt, die den Bolzen unter Bildung einer axial und rotativ beweglichen Gleitlagerung umgreift,
wobei der Bolzen lösbar am Gehäusekörper axial fixiert ist und die Führung als eine Hülse ausgebildet ist, die den Bolzen unter Bildung einer zusätzlichen, axial beweglichen Gleitlagerung umgreift.

Die Grundidee der Erfindung besteht darin, als eigentlichen Verschlussmechanismus für den Deckel den Ansatz des Schiebedeckels anzuwenden, zugleich aber nach Art eines Klappdeckels eine scharnierartige Anlenkung des Deckels am Gehäusekörper vorzusehen, welche die Unverlierbarkeit des Deckels gewährleistet und zugleich dessen Positionierungs- und Ausrichtungsfreiheitsgrade derart reduziert, dass das korrekte Einführen der Führungskanten des Deckels in die Deckel-Führungsnuten des Gehäusekörpers erleichtert wird. Somit werden die Vorzüge eines Schiebedeckels und diejenigen eines Klappdeckels miteinander verbunden; ihre jeweiligen Nachteile werden hingegen aufgehoben. Im geöffneten Zustand verhält sich der Deckel im Wesentlichen wie ein Klappdeckel; im geschlossenen bzw. dem Zuschieben unmittelbar vorausgehenden Zustand verhält sich der Deckel hingegen wie ein Schiebedeckel. Insbesondere wird jegliche bei Betätigung des Quetschventils auf den geschlossenen Deckel ausgeübte Normalkraft allein über die Wechselwirkungsflächen der Führungskanten und Deckel-Führungsnuten in den Gehäusekörper eingeleitet; der Scharniermechanismus bleibt dabei vollkommen kräftefrei. Beim Öffnen des Deckels, d.h. bei durch die Kanten-/Nut-Wechselwirkung geführtem Verschieben in Längsrichtung aus der Verschlussstellung heraus, gleitet die Hülse kräftefrei in bolzenaxialer Richtung auf dem Bolzen. Erst wenn die Deckel-Führungsnuten des Gehäusekörpers und die Führungskanten des Deckels miteinander außer Eingriff geraten, wirken Bolzen und Hülse gemeinsam als Schwenklager, welches ein Verschwenken des Deckels und damit ein Freigeben der Öffnung des Gehäusekörpers ermöglicht, ohne dass der Deckel mechanisch vom Gehäusekörper getrennt würde. In diesem aufgeklappten Zustand lässt sich der Schlauch ein- und auslegen bzw. wechseln. Zum Verschließen wird der Deckel in seiner verschobenen Stellung wieder zugeklappt, wobei die Hülse/Bolzen-Verbindung zunächst als Schwenklager und im vollständig zugeklappten Zustand auch als Axialführung dient, mittels derer die Führungskanten des Deckels höhenrichtig und ohne Verkippung korrekt in die Deckel-Führungsnuten des Gehäusekörpers eingeschoben werden können. Sobald Deckel-Führungsnuten und Führungskanten miteinander in Eingriff sind, wird die Hülse/Bolzen-Verbindung erneut wirkungslos und der Deckel fungiert im Wesentlichen wieder als reiner Schiebedeckel.

Wie Eingangs erläutert, besteht ein Nachteil üblicher Schiebedeckel in ihrem großen Platzbedarf in Längsrichtung. Um dieses Problem zu entschärfen, ist bei einer Weiterbildung der Erfindung vorgesehen dass die Führungskanten des Deckels sowie die Deckel-Führungsnuten des Gehäusekörpers jeweils aus in Längsrichtung voneinander beabstandeten Abschnitten bestehen, die derart aufeinander abgestimmt sind, dass wenigstens eine Schiebeposition des Deckels existiert, in der die Abschnitte seiner Führungskanten in intermittierender Anordnung mit den Abschnitten der Deckel-Führungsnuten des Gehäusekörpers stehen, wobei die Abschnitte beider Arten, d. h. die Führungskanten-Abschnitte einerseits und die Deckel-Führungsnuten-Abschnitte andererseits, außer Eingriff miteinander stehen. Dies entspricht im Wesentlichen einer kammartigen Ausgestaltung der Führungskanten einerseits und zumindest der oberen Nutkanten der Deckel-Führungsnuten andererseits. Die unteren, d. h. ins Gehäuseinnere hinein gelegenen Nutwände der Deckel-Führungsnuten können hingegen durchgehend und ununterbrochen gestaltet sein. Sie sind dies sogar vorteilhafterweise, um eine ebene, ununterbrochene Auflagefläche für die Führungskanten des Deckels zu bieten. Außer Eingriff miteinander sind derart abschnittsweise gestaltete Führungskanten und Führungsnuten, wenn die "Zinken" ihrer jeweiligen "Kämme" zueinander "auf Lücke" stehen. In einem solchen Zustand lässt sich der Schiebedeckel vom Gehäusekörper abheben bzw. erfindungsgemäß von diesem wegklappen. Die dazu benötigte Verschiebung in Längsrichtung hängt von der speziellen Abstimmung der Nut- bzw. Kanten-Abschnitte und ihrer Lücken ab, ist jedoch in jedem Fall kleiner als die vollständige Deckellänge, um die der Deckel ohne derartige, abschnittsweise Gestaltung von Führungsnuten und Führungskanten verschoben werden müsste.

Wie erläutert dient die Anlenkung des Hebels über seine Hülse und den Bolzen am Gehäusekörper unter anderem der Unverlierbarkeit des Deckels. Es sind jedoch Situationen denkbar, in denen eine Trennung des Deckels vom Gehäusekörper durchaus wünschenswert erscheint. So sind Quetschventile denkbar, deren Gehäuse zur Anpassung an unterschiedliche Schlauchgrößen mit unterschiedlichen Schlauchführungen und unterschiedlichen Klemmgliedern ausstattbar sind. Ein solcher Austausch von Schlauchführung und Klemmglied kann auch den Austausch des Widerlagers, gegen welchen der Schlauch mittels des Klemmgliedes gepresst wird, erforderlich machen. Wie eingangs bereits erläutert, bildet der Deckel regelmäßig das Widerlager, wozu er speziell geformte Widerlagerbereiche aufweist. Sind diese Widerlagerbereiche nicht austauschbar am übrigen Deckel fixiert, sondern integraler Bestandteil des Deckels, muss zum Austausch des Widerlagers der gesamte Deckel ausgetauscht werden. Um dies zu erleichtern, ist bei der Erfindung vorgesehen, dass der Bolzen lösbar am Gehäusekörper fixiert ist. Insbesondere kann vorgesehen sein, dass der Bolzen in zwei Augen gelagert ist, die in Längsrichtung beabstandet voneinander an der Außenseite der zugeordneten Seitenwand des Gehäusekörpers angeordnet sind. Zumindest eines dieser Augen, welches hier als erstes oder auch eingangsseitiges Auge bezeichnet werden soll, ist als Durchgangsöffnung ausgebildet. Durch diese Durchgangsöffnung kann der im Querschnitt vorzugsweise runde Bolzen hindurchgeschoben und in das beabstandete, zweite Auge eingeschoben werden. Dies erfolgt bevorzugt bei geschlossenem Schiebe-Deckel, d. h. wenn der Deckel bereits über die Wechselwirkung zwischen den Deckel-Führungsnuten des Gehäusekörpers und den Führungskanten des Deckels derart am Gehäusekörper festgelegt ist, dass die Hülse koaxial zu den Bolzenlager-Augen ausgerichtet ist, sodass der Bolzen beim Einschieben in die Augen zugleich durch die Hülse hindurchgeschoben werden kann. Zum Austausch des Deckels wird der Bolzen in umgekehrter Weise aus Hülse und Augen herausgezogen und der Deckel kann nach dem öffnenden Verschieben vollständig abgenommen werden. Aus weiter unten noch näher erläuterten Gründen wird es als besonders vorteilhaft angesehen, wenn das zweite Auge als Sacköffnung ausgebildet ist, durch die der Bolzen nicht hindurch-, sondern in die er lediglich gegen einen Anschlag eingeschoben werden kann. Dabei weisen der Bolzen an seinem dem zweiten Augen nächstgelegenen Ende und/oder die Sacköffnung ein in Bolzenaxialrichtung federvorgespannt verschiebliches Anschlagelement auf. Dieses federvorgespannte Anschlagelement wirkt dem Einschieben des Bolzens in das zweite Auge entgegen.

Grundsätzlich ist eine Axialfixierung des Bolzens nicht erforderlich, da er, wie weiter oben bereits erläutert, beim bestimmungsgemäßen Betrieb eigentlich keine Axialkräfte aufzunehmen hat. Allerdings können dauerhafte Vibrationen oder unsachgemäße Handhabung doch zu einer Längsverschiebung des Bolzens führen, die dann ein unerwünschtes Öffnen des vom Bolzen zusammen mit der Hülse gebildeten Scharniers zur Folge haben kann. Daher ist eine Axialfixierung des Bolzens wünschenswert. Hierzu trägt, wie bei einer bevorzugten Weiterbildung der Erfindung vorgesehen, bei, wenn der Bolzen im Bereich seiner Lagerung im ersten Auge einen Radialvorsprung, d.h. einen radial erstreckten Vorsprung aufweist und das erste Auge an seiner Innenseite eine in Bolzenaxialrichtung erstreckte, korrespondierende, erste Nut aufweist deren dem zweiten Auge abgewandte Stirnseite offen ist. Mit anderen Worten ist auf der Innenseite des ersten Auges eine eingangsseitig offene, längserstreckte Nut vorgesehen. In diese kann beim Schieben des Bolzens durch das erste Auge hindurch besagter Radialvorsprung eingreifen.

Bei einer möglichen Ausführungsform der Erfindung ist besagte Nut ausgangsseitig des ersten Auges geschlossen und weist innerhalb des ersten Auges einen Knick auf. Damit der in die erste Nut eingreifende Radialvorsprung den Knick durchfahren kann, bedarf es einer entsprechenden Drehung des Bolzens während des Einschiebens, sodass der Bolzen nach Art eines Karabinerverschlusses in der gewinkelten Nut im ersten Auge verriegelt ist.

Allerdings ist die Ausbildung geknickter Nuten in Innenwände von Öffnungen vergleichsweise kleinen Durchmessers technisch aufwändig. Bei einer bevorzugten Alternative ist daher vorgesehen, dass beide Stirnseiten der ersten Nut offen sind, sodass der Bolzen soweit eingeschoben werden kann, sodass sein Radialvorsprung die als Durchgangsnut ausgebildete erste Nut vollständig durchfährt und im Bereich zwischen den beiden Augen positioniert wird. Eine Verdrehung des Bolzens in dieser Axialstellung verhindert ein Herausziehen des Bolzens, da der Radialvorsprung dann am axial inneren Rand des ersten Auges anschlägt. Diese Ausführungsform wird bevorzugt gemeinsam mit dem oben bereits erwähnten federvorgespannten Anschlagelement am distalen Bolzenende bzw. im zweiten Auge realisiert. Bei entsprechender Dimensionierung bedarf es nämlich eines Zusammenpressens der Feder, um den Radialvorsprung die erste Nut vollständig durchwandern zu lassen. Nach dem nachfolgenden Verdrehen des Bolzens wird der Radialvorsprung durch die Federkraft des Anschlagelementes gegen den axial inneren Rand des ersten Auges gepresst.

Um diese Axialsicherung noch weiter zu verbessern, kann bei einer besonders bevorzugten Ausbildung der Erfindung vorgesehen sein, dass das erste Auge an seiner Innenseite eine zur ersten Nut versetzte, in Bolzenaxialrichtung erstreckte, ebenfalls zu dem Vorsprung des Bolzens korrespondierende, zweite Nut aufweist, deren dem zweiten Augen zugewandte Stirnseite offen und deren dem zweiten Auge abgewandte Stirnseite geschlossen ist. Mit anderen Worten ist die zweite Nut als eine nach axial innen offene Sacknut ausgebildet. Erfolgt bei einer solchen Ausgestaltung die Verdrehung des Bolzens so weit, dass der Radialvorsprung vor dem Eingang der zweiten Nut zu liegen kommt, wird er durch die Federkraft des Anschlagelements in diese zweite Nut hinein und gegen deren geschlossene Stirnseite gepresst, wobei die Wechselwirkung zwischen den Nutwänden und dem Radialvorsprung eine Drehsicherung des Bolzens verursacht. Mit anderen Worten ist es in dieser Situation ausgeschlossen, dass der Bolzen versehentlich so verdreht wird, dass der Radialvorsprung an den axial inneren Eingang der ersten Nut gelangte und in axialer Richtung auswandern könnte. Vielmehr bedarf es einer Kraft in axialer Einschieberichtung, um den Radialanschlag aus der zweiten Nut freizubekommen, sodann einer Verdrehung des Bolzens so weit, dass der Radialvorsprung am axial inneren Eingang der ersten Nut zu liegen kommt, und im Anschluss eines axialen Herausziehens des Bolzens aus den Augen. Dieser komplexe Vorgang ist zwar leicht, nicht jedoch unabsichtlich und gewiss nicht zufällig, bspw. vibrationsbedingt, durchführbar. Um diese Handhabung zu erleichtern, ist bevorzugt vorgesehen, dass der Bolzen in seinem dem ersten Auge axial vorgelagerten Endbereich einen radial abstehenden Betätigungshebel aufweist. Über diesen können die benötigten Axial- und Rotationskräfte eingeleitet werden.

Um auch für den Deckel eine überwindbare Axialfixierung in seiner Verschlussposition zu gewährleisten ist bevorzugt vorgesehen, dass der Deckel und der Gehäusekörper zueinander korrespondierende Elemente eines Kugelrastmechanismus aufweisen, die in Verschlussstellung des Deckels zur Realisierung einer lösbaren Sicherung gegen Längsverschiebung zwischen dem Deckel und dem Gehäusekörper miteinander wechselwirken. Bevorzugt ragen dabei am Gehäusekörper gelagerte, federvorgespannte, gerundete Rastelemente, z.B. Kugeln oder Kugelkopfbolzen, in den Verfahrweg des Deckels hinein und werden aufgrund ihrer gerundeten Form beim Überfahren durch den Deckel entgegen ihrer Federvorspannkraft in ihren Sitz im Gehäusekörper gedrückt. Die Verschlussposition des Deckels zeichnet sich unter anderem dadurch aus, dass korrespondierende Ausnehmungen in den Laufflächen des Deckels an den Ort der besagten federvorgespannten Rastelemente gelangen, sodass diese federgetrieben in gesagte Ausnehmungen eingreifen. Hierdurch ist eine Verriegelung des Deckels gewährleistet. Diese ist jedoch durch entsprechenden Kraftaufwand bei der Axialverschiebung in analoger Weise überwindbar. Außerdem werden durch diese Federvorspannung die Führungskanten des Deckels einseitig gegen eine der Nutwände der Deckel-Führungsnuten gepresst, wodurch einem entsprechenden Spiel entgegengewirkt wird. Die Deckel-Führungsnuten können daher relativ zu den Führungskanten vergleichsweise breit dimensioniert werden, was wiederum das Einführen letzterer in erstere erleichtert. Selbstverständlich ist auch die umgekehrte Anordnung möglich, bei der die federvorgespannten Rastelemente Bestandteil des Deckels und die korrespondierenden Rastausnehmungen Bestandteil des Gehäusekörpers sind.

Bevorzugte Ausführungsformen sind Gegenstand der abhängigen Ansprüche.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine Explosionsdarstellung eines Quetschventils mit erfindungsgemäßem Gehäuse,
- Figur 2:: eine perspektivische Darstellung des Quetschventils von Figur 1 im Zusammenbauzustand mit geschlossenem Deckel,
- Figur 3:: eine Schnittdarstellung durch das Quetschventil von Figur 2 im geöffneten Ventilzustand,
- Figur 4:: eine Schnittdarstellung durch das Quetschventil von Figur 2 im geschlossenen Ventilzustand,
- Figur 5:: eine perspektivische Darstellung des Quetschventils von Figur 1 im Zusammenbauzustand mit geöffnetem Deckel,
- Figur 6:: eine Schnittdarstellung des Gehäusekörpers des Quetschventils von Figur 1 sowie
- Figur 7:: eine Schnittdarstellung des Gehäusekörpers des Quetschventils von Figur 1 ohne Bolzen.

### Beschreibung bevorzugter Ausführungsformen

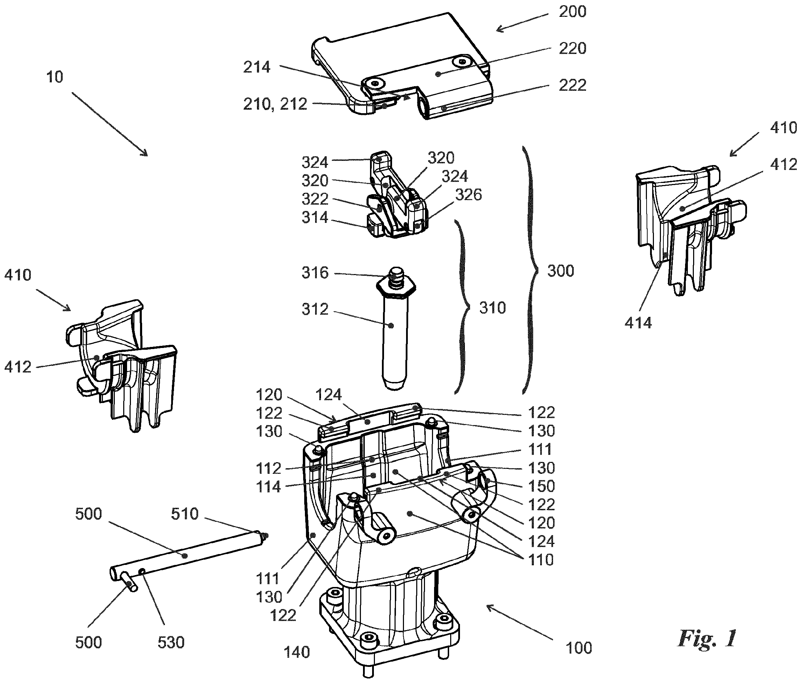

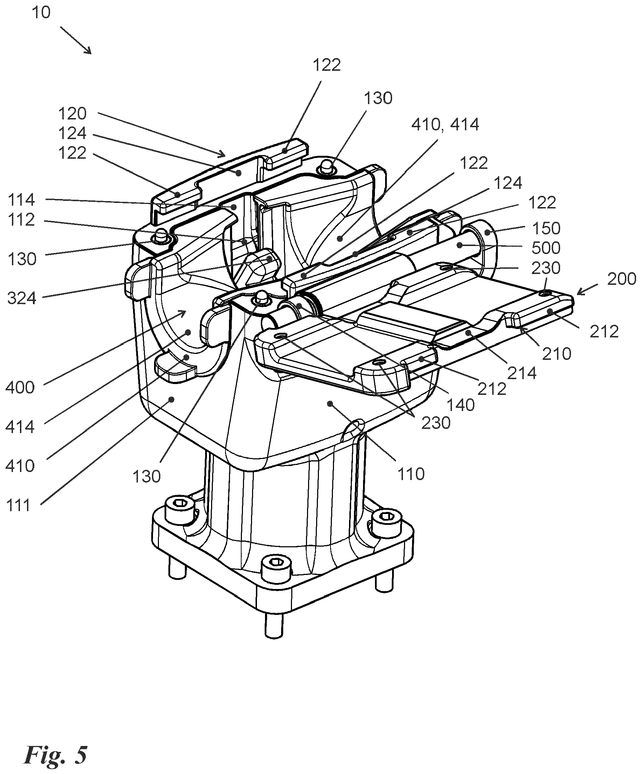

Gleiche Bezugszeichen in den Figuren deuten auf gleiche oder analoge Elemente hin. Figur 1 zeigt eine Explosionsdarstellung eines Quetschventils 10 mit einem Gehäuse gemäß der vorliegenden Erfindung. Das Quetschventil 10 umfasst einen Gehäusekörper 100 mit längs erstreckten Seitenwänden 110 und mit U-förmigen Ausnehmungen versehenen Stirnwänden 111. In den Hohlraum des Gehäusekörpers 100 sind Gehäuseeinsätze 410 einsetzbar, die Abschnitte einer Rundbodennut 412 aufweisen und gemeinsam mit den Ausnehmungen der Stirnwände 111 des Gehäusekörpers 100 eine Schlauchführung 400 für einen nicht dargestellten, längserstreckten, medienleitenden, flexiblen Schlauch bilden. Diese Schlauchführung 400 ist insbesondere in der Darstellung von Figur 5 gut erkennbar.

An ihren Oberkanten tragen die Seitenwände 110 des Gehäusekörpers 100 jeweils eine Deckel-Führungsnut 120, die bei der dargestellten Ausführungsform als zwei um eine Lücke 124 voneinander beabstandete Abschnitte 122 ausgebildet sind.

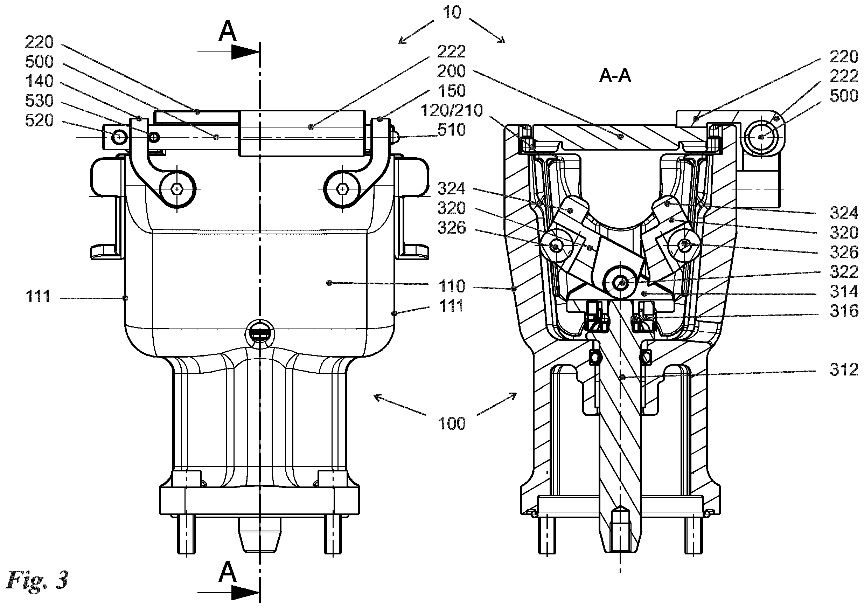

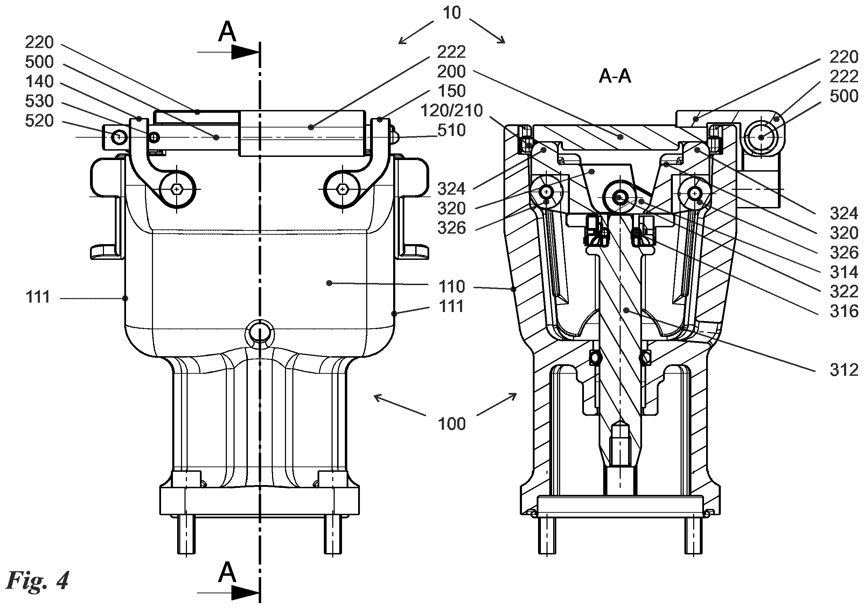

An zentraler Position weisen die Innenseiten der Seitenwände 110 des Gehäusekörpers 100 jeweils eine vertikal erstreckte erste Klemmglied-Führungsnut 114 auf, die eine längs erstreckte Stufe 112 zeigt. Auf die Funktion der Stufe 112 soll weiter unten im Kontext der Figuren 3 und 4, die jeweils eine Schnittdarstellung durch das Quetschventil 10 in der Ebene der ersten Klemmglied-Führungsnuten zeigen, noch näher eingegangen werden.

In den Hohlraum des Gehäusekörpers 100 sind Gehäuseeinsätze 410 einsetzbar, die Abschnitte einer Rundbodennut 412 aufweisen und gemeinsam mit den Ausnehmungen der Stirnwände 111 des Gehäusekörpers 100 eine Schlauchführung 400 für einen nicht dargestellten, längs erstreckten, medienleitenden, flexiblen Schlauch bilden. Diese Schlauchführung 400 ist insbesondere in der Darstellung von Figur 5 gut erkennbar. An ihren einander zugewandten Stirnseiten weisen die Gehäuseeinsätze 410 jeweils eine vertikal erstreckte, Klemmglied-Führungsnut 414 auf, auf deren Funktion weiter unten noch näher eingegangen werden soll.

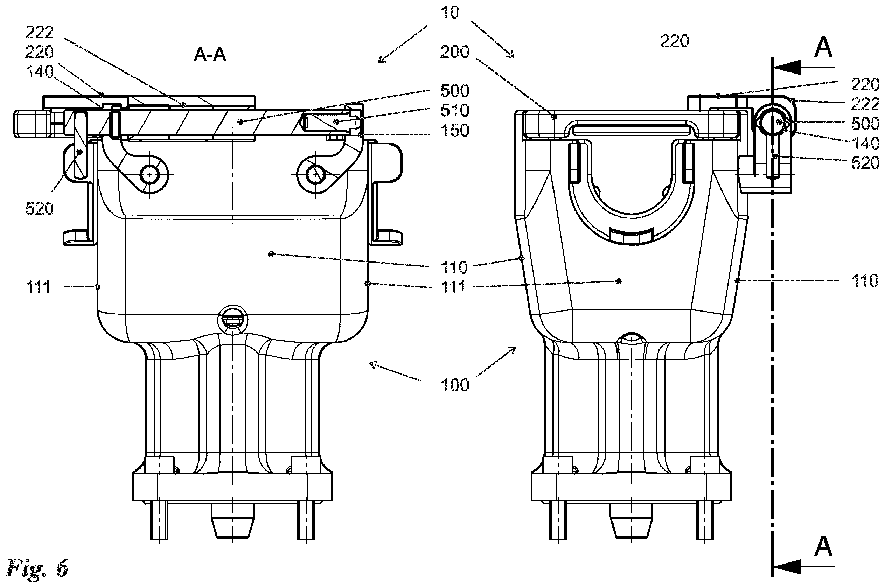

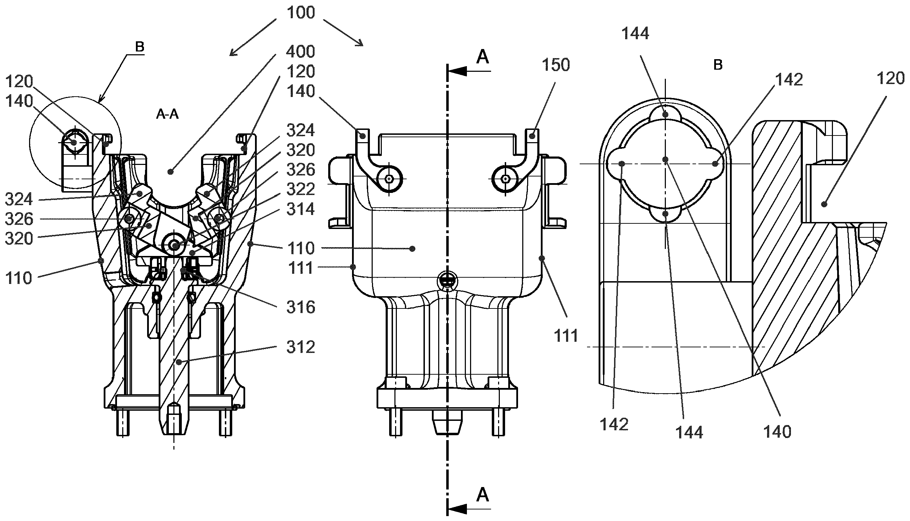

Eine der Seitenwände 110 des Gehäusekörpers 100 trägt an ihrer Außenseite ein erstes Auge 140 und ein zweites Auge 150, die in Längsrichtung voneinander beabstandet derart ausgebildet und ausgerichtet sind, dass ein Bolzen 500 in sie eingeschoben werden kann, um so eine axiale und rotative Gleitlagerung zu erfahren. Das erste Auge140 ist bei der gezeigten Ausführungsform als Durchgangsöffnung ausgebildet, das zweite Auge 150 als Sacköffnung. Bei der dargestellten Ausführungsform weist der Bolzen 500 an seinem distalen Ende ein federvorgespanntes Anschlagelement 510 und an seinem proximalen Ende einen Betätigungshebel 520 auf. Zudem weist bei der dargestellten Ausführungsform der Bolzen 500 zwischen seinen beiden Enden in naher Nachbarschaft zum Betätigungshebel 520 einen Radialvorsprung 530 auf. Auf diese Elemente und ihre Funktion soll weiter unten im Kontext der Figuren 6 und 7 noch näher eingegangen werden.

Weiter umfasst das Quetschventil 10 einen Deckel 200, dessen Längsseiten jeweils mit einer Führungskante 210 bewehrt sind. Die Führungskanten 210 sind bei der dargestellten Ausführungsform in jeweils zwei Abschnitte 212 unterteilt, die um eine Lücke 214 voneinander beabstandet sind. Diese Verhältnisse sind insbesondere in Figur 5 deutlich erkennbar. Die Führungskanten 210 wechselwirken bei Betrieb mit den Deckel-Führungsnuten 120 des Gehäusekörpers 100. Hierbei lassen sich die Führungskanten 210 in die Deckel-Führungsnuten 120 einführen, sodass die genannten Elemente miteinander eine verschiebliche Gleitlagerung des Deckels 200 am Gehäusekörper 100 bilden. Durch Längsverschiebung des Deckels 200 kann der oben offene Gehäusekörper 100 also nach dem Prinzip des Schiebedeckels geschlossen bzw. geöffnet werden. Die geschlossene Schiebestellung des Deckels ist definiert durch vier in den Laufflächen des Gehäusekörpers 100 eingebrachte, federvorbelastete Kugelkopfstifte 130, die in korrespondierende Rastausnehmungen 230 in der Unterseite des Deckels 200 einrasten. Diese Restausnehmungen 230 sind in Figur 5 erkennbar. Die Abschnitte 122 und die Lücke 124 der Deckel-Führungsnuten 120 des Gehäusekörpers 100 sind derart auf die korrespondierenden Abschnitte 212 und die Lücke 214 der Führungskanten 210 des Deckels 200 abgestimmt, das zumindest eine Schiebeposition des Deckels existiert, in der zwei einander gegenüberliegende Abschnitte 212 der Führungskanten 210 des Deckels 200 in den einander gegenüberliegenden Lücken 124 der Deckel-Führungsnuten 120 des Gehäusekörpers 100 zu liegen kommen, sodass der Deckel 200 senkrecht vom Gehäusekörper 100 abgehoben bzw. von diesem um eine parallel zu seinen Seitenwänden liegende Schwenkachse verschwenkt werden kann.

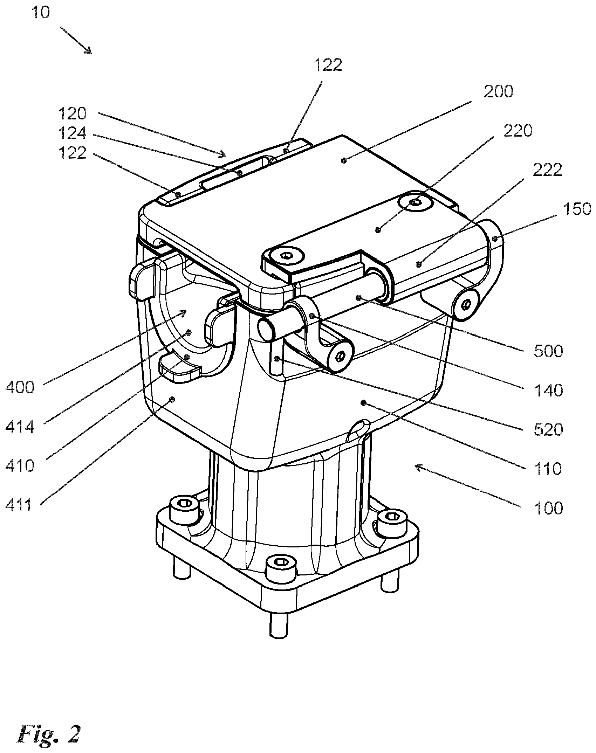

Um eine solche Schwenkachse zur Verfügung zu stellen, weist der Deckel 200 eine Lasche 222 auf, welche eine seiner Führungskanten 210 lateral überkragt. An ihrem lateral äußeren Ende trägt die Lasche 220 eine Hülse 222, die im Zusammenbauzustand des Gehäuses, wie insbesondere in den Figuren 2 und 5 erkennbar, mit den Augen 140, 150 und dem in diese eingeschobenen Bolzen 500 fluchtet, sodass der Bolzen 500 gemeinsam mit der Hülse 222 ein axiales und rotatives Schwenklager für die Hülse 222 und somit für den Deckel 200 bildet. Dabei ist zu beachten, dass die Länge der Hülse 222 kürzer dimensioniert ist als der Abstand zwischen den beiden Augen 140, 150, sodass eine Axialverschiebung des Deckels 200 relativ zum Gehäusekörper 100 möglich ist; insbesondere, wenn die Führungskanten 210 des Deckels in Eingriff mit den Deckel-Führungsnuten 120 des Gehäusekörpers 100 stehen.

Weiter zeigt Figur 1 ein Klemmglied 300, umfassend einen Stößel 310 und zwei Klemmbacken 320. Der Stößel 310 ist bei der dargestellten Ausführungsform zweigeteilt ausgebildet, nämlich mit einem Stößelschaft 312 und einer Stößelspitze 314, welche eine Anlenkung 322 für die Klemmbacken 320 trägt. Die Klemmbacken 320 sind klauenartig ausgebildet und weisen an ihren Spitzen jeweils aufgebogene Klauenenden 324 auf. Am Knickpunkt der Klauenenden 324 weisen die Klemmbacken 320 an ihren Außenseiten jeweils eine Kontaktrolle 326 zur Wechselwirkung mit den ersten Klemmglied-Führungsnuten 114 des Gehäusekörpers 100 auf, worauf weiter unten noch näher eingegangen wird.

Der Stößelschaft 312 und die Stößelspitze 314 sind mittels eines Kugelrastmechanismus 316, der insbesondere in der Schnittdarstellung der Figuren 3 und 4 besser erkennbar ist, lösbar miteinander verbindbar.

Figur 2 zeigt das Quetschventil 10 im Zusammenbauzustand mit geschlossenem Deckel 200. Die Figuren 3 und 4 zeigen jeweils eine Schnittdarstellung des Quetschventils 10 von Figur 2 in Ventil-Öffnungsstellung (Figur3) und VentilSchließstellung (Figur 4). Die Schnittebenen A-A in den Figuren 3 und 4 sind jeweils in der links neben der Schnittzeichnung dargestellten Hilfszeichnung markiert. Man erkennt, dass der Schnitt quer zur Längsrichtung des Quetschventils 10, d.h. quer zur Schlauchführungsrichtung und mittig verläuft, sodass die Schnittebene exakt mittig der ersten Klemmglied-Führungsnuten 114 verläuft. Aufgrund der Stufe 112, ist der zwischen den Seitenwänden gebildete Kanal in seinem unteren Bereich schmaler als in seinem oberen Bereich. In der Ventil-Öffnungsstellung, d.h. der in Figur 3 gezeigten Rückzugsstellung des Klemmgliedes 300, befinden sich die Klemmbacken 320 im unteren, schmaleren Kanalbereich. Sie liegen mit ihren Kontaktrollen 326 am Nutgrund der ersten Klemmglied-Führungsnuten 312 an. Die Relativdimensionierung ist, wie in Figur 3 erkennbar, so gewählt, dass das durch die Klemmbacken 320 gebildete Klemmmaul nicht vollständig geöffnet ist. Gleichwohl ist der Freiraum über dem Klemmmaul bis zur Unterseite des Deckels 200 groß genug, um einen flexiblen, medienleitenden Schlauch in der Schlauchführung 400 zu positionieren; insbesondere durch Einlegen des Schlauchs in die Rundbodennuten 412 der Gehäuseeinsätze 410.

Zum Schließen des Ventils wird das Klemmglied 300 auf den Deckel zu verschoben, sodass der Maulgrund des Klemmmauls den Schlauch gegen den als Widerlager wirkenden Deckel 200 presst und dabei das Lumen des Schlauchs verengt oder vollständig verschließt. Während des Vorschubs des Stößels 310 überfahren die Kontaktrollen 326 die Stufe 112 und gelangen somit in den oberen, breiteren Kanalbereich, in dem sich das Klemmmaul vollständig öffnen kann. Diese Öffnung des Klemmmauls wird durch die dem Stößelvorschub entgegenwirkende Elastizität des Schlauches erzwungen.

Beim Wieder-Öffnen des Ventils wird der Stößel zurückgefahren. Die Kontaktrollen 326 überwinden erneut die Stufe 112, sodass die Klemmbacken 320 durch den geringeren Abstand der Seitenwände 110 im unteren Kanalbereich aufeinander zu verschwenkt werden, sodass sich das Klemmmaul dabei teilweise wieder schließt. Hierbei drücken die Klauenenden 324 von lateral außen auf die Falzbereiche des noch nicht vollständig geöffneten Schlauchs und unterstützen so die Wieder-Öffnung seines Lumens auch in Fällen, in denen die Eigenelastizität des Schlauches, beispielsweise wegen eines Anhaftens der Schlauchinnenwände aneinander, nicht ausreicht. Die durch die Stufe 112 in Wechselwirkung mit den Kontaktrollen 326 bewirkte Zwangsführung der Klemmbacken 320 stellt eine mechanisch einfache, sehr robuste Möglichkeit dar, zuverlässig die unverzügliche, vollständige Wieder-Öffnung des Schlauchlumens beim Öffnen des Quetschventils 10 zu erzwingen. Die Anordnung der Stufe 112 in den ersten Klemmglied-Führungsnuten 114 ist für die Funktionalität nicht zwingend, aber vorteilhaft, da hierdurch eine Rotation des Klemmgliedes 300 um seine Stößelachse verhindert wird. Eine weitere Maßnahme zur Verhinderung einer solchen Rotation stellen die zweiten Klemmglied-Führungsnuten 114 in den einander gegenüberliegenden Seiten der Gehäuseeinsätze 410 der Schlauchführung 400 dar. Sie wechselwirken mit Längsvorsprüngen der Stößelspitze 314, die in Figur 1 ohne besonderes Bezugszeichen erkennbar sind.

Zum Austausch des Schlauchs und/oder der Gehäuseeinsätze und/oder des Klemmgliedes und/oder Teilen davon muss der Deckel 200 geöffnet werden. Wie oben bereits erläutert, ist die in Figur 2 gezeigte Schließstellung des Deckels definiert durch den Rasteingriff der federvorgespannten Kugelkopfstifte 130 des Gehäusekörpers 100 in die korrespondierenden Rastausnehmungen 230 des Deckels 200. Zudem sind in dieser Schließstellung die Führungskanten 210 des Deckels 200 in den korrespondierenden Deckel-Führungsnuten 120 des Gehäusekörpers 100 geführt. Dies bedeutet, dass die Abschnitte 212 der Führungskanten 210 des Deckels 200 mit den korrespondierenden Abschnitten 122 der Deckel-Führungsnuten 120 des Gehäusekörpers 100 kolokalisiert sind. Ein senkrechtes Abheben oder ein Verschwenken des Deckels ist in diesem Zustand nicht möglich. Aufgrund der federvorgespannten Kugelkopf-Rastung 130/230 ist der Deckel 200 in dieser Position vertikal und horizontal spielfrei fixiert. Die Hülse 222, die den Bolzen 500 koaxial umgreift, muss in dieser Position keine Kräfte abstützen.

Eine Verschiebung des Deckels in Längsrichtung ist unter Aufwendung einer dem Rastmechanismus 130/230 überwindenden Längskraft möglich. Die Hülse 222 wird dabei auf dem in den Augen 140, 150 gelagerten Bolzen - nach wie vor kräftefrei - längs, d.h. in Bolzenaxialrichtung, verschoben. In einer Schiebestellung, in der die Abschnitte 212 der Führungskante 210 des Deckels 200 auf Lücke mit den Abschnitten 122 der Deckel-Führungsnuten 120 des Gehäusekörpers 100 geraten, wird ein Abheben bzw. eine Verschwenkung des Deckels möglich, wobei die Federvorspannung der Kugelkopfstifte 130 den Deckel bei Erreichen dieser Schiebestellung hochdrücken und die Schiebestellung so erkennbar markieren. In diesem Zustand kann die Hülse 222 gemeinsam mit dem Bolzen 500 als Schwenklager für den Deckel 200 dienen, sodass dieser in die in Figur 5 dargestellte, aufgeschwenkte Position überführt werden kann. In dieser Position ist das Innere des Gehäusekörpers 100 zugänglich - insbesondere zu Zwecken des Austauschs von Schlauch, Gehäuseeinsätzen 410 und/oder Klemmglied 300 bzw. Teilen davon.

Das Schließen des Deckels 200 erfolgt in umgekehrter Reihenfolge wobei die durch die Hülse 222 und den Bolzen 500 realisierte Axialführung ein sicheres, verkantungsfreies Einführen der Führungskanten 210 des Deckels 200 in die Deckel-Führungsnuten 120 des Gehäusekörpers 100 ermöglicht.

Wie erwähnt, ist die Wechselwirkung zwischen Hülse 222 und Bolzen 500 im Wesentlichen axialkräftefrei. Dies ist jedoch eine idealisierte Annahme. In der Praxis können sich, insbesondere durch dauerhafte Vibrationen, auf den Bolzen 500 wirkende Axialkräfte ergeben. Daher ist bei der gezeigten Ausführungsform eine Axialfixierung des Bolzens vorgesehen, die zugleich eine Entnahme des Bolzens zum Zweck der vollständigen Entfernung des Deckels 200 ermöglicht. Zur Illustration wird auf die Figuren 6 und 7 verwiesen, die unterschiedliche Schnittdarstellungen entlang der Schnittebenen A-A, wie in den rechts neben der jeweiligen Schnittdarstellung gezeigten Hilfszeichnungen angedeutet. Figur 7 zeigt zugleich eine vergrößerte Darstellung des Ausschnitts B der entsprechenden Schnittzeichnung.

Wie in besagter Vergrößerungsdarstellung des ersten Auges 140 in Figur 7 erkennbar, trägt das als Durchgangsöffnung ausgebildete, erste Auge 140 eine erste Nut 142, die als das Auge in Längsrichtung durchsetzende Durchgangsnut ausgebildet ist. In einem Winkelabstand von 90° ist eine zweite Nut 144 angeordnet, die als längs erstreckte Sacknut ausgebildet ist, deren dem zweiten Auge 150 zugewandte Stirnseite offen ist. Beim Einführen des Bolzens 500 in das erste Auge wird dieser mithilfe des Betätigungshebels 520 so ausgerichtet, dass sein Radialvorsprung 530 in die erste Nut 242 eingeführt wird. Der Bolzen wird dabei so weit vorgeschoben, dass der Radialvorsprung 530 die erste Nut 142 vollständig quert und zwischen den beiden Augen 140, 150 zu liegen kommt. Insbesondere in der letzten Phase erfolgt diese Bewegung gegen die Federkraft des federvorgespannten Anschlagelementes 510, welches in dieser Phase an der geschlossenen Rückwand des als Sacköffnung ausgebildeten zweiten Auges 150 anschlägt. Im Anschluss wird der Bolzen mittels des Betätigungshebels 520 um 90° verdreht, sodass sein Radialvorsprung 530 vor dem Eingang der zweiten Nut 144 zu liegen kommt. Durch die Federkraft des Anschlagelementes 510 wird der Bolzen 500 beim Loslassen des Betätigungsgliedes 520 in die als Sacknut ausgebildete zweite Nut 144 hineingedrückt, wobei diese Rückwärtsbewegung des Bolzens 500 beim Anschlag des Radialvorsprungs 530 am geschlossenen Ende der zweiten Nut 144 endet. Der Bolzen 500 ist dabei so dimensioniert, dass sein distales Ende in dieser Situation noch nicht aus dem als Sacköffnung ausgebildeten zweiten Auge 150 frei kommt. Der Bolzen 500 ist damit axial und rotativ gesichert.

Zur Entnahme des Bolzens 500 bedarf es eines Drucks auf sein proximales Ende, sodass sein Radialvorsprung 530 gegen die Federkraft des Anschlagelementes 510 aus der Sacknut 144 frei kommt. Verdrehung des Bolzens 500 um 90° positioniert sodann seinen Radialvorsprung 530 wieder vor der Durchgangsnut 142, was ein Herausziehen des ganzen Bolzens aus den beiden Augen 140, 150 ermöglicht. Bei der dargestellten Ausführungsform sind die erste und die zweite Nut 142, 144 jeweils in doppelter Ausführung ausgebildet, sodass die jeweilige Drehrichtung des Bolzens beim Ver- bzw. Entriegeln unmaßgeblich ist.

Der Fachmann wird verstehen, dass die beschriebene, isolierte Fixierung und Entnahme des Bolzens 500 in der Praxis kaum eine Rolle spielt. Wichtiger ist die Anlenkung des Deckels 200 mittels des Bolzens 500. Der oben beschriebene Prozess wird also in der Regel mit in Schließstellung befindlichem Deckel 200 durchgeführt, sodass der Bolzen 500 die dann bereits wohldefiniert positionierte Hülse 222 koaxial durchsetzen kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

| | | | |
|---|---|---|---|
| 10 | Quetschventil | | |
| | | 300 | Klemmglied |
| 100 | Gehäusekörper | 310 | Stößel |
| 110 | Seitenwand | 312 | Stößelschaft |
| 111 | Stirnwand | 314 | Stößelspitze |
| 112 | Stufe | 316 | Kugelrastmechanismus |
| 114 | erste Klemmglied-Führungsnut | 320 | Klemmbacke |
| 120 | Deckel-Führungsnut | 322 | Anlenkung |
| 122 | Abschnitt von 120 | 324 | Klauenende |
| 124 | Lücke zwischen 122 | 326 | Kontaktrolle |
| 130 | Kugelkopfstift | | |
| 140 | erstes Auge | 400 | Schlauchführung |
| 142 | Durchgangsnut / erste Nut | 410 | Gehäuseeinsatz |
| 144 | Sacknut / zweite Nut | 412 | Rundbodennut |
| 150 | zweites Auge | 414 | zweite Klemmglied-Führungsnut |
| 200 | Deckel | 500 | Bolzen |
| 210 | Führungskante | 510 | Anschlagelement |
| 212 | Abschnitt von 210 | 520 | Bestätigungshebel |
| 214 | Lücke zwischen 212 | 530 | Radialvorsprung |
| 220 | Lasche | | |
| 222 | Hülse | | |
| 230 | Rastausnehmung | | |

## Patentansprüche

1. Ventilgehäuse für ein Quetschventil, umfassend
- einen Gehäusekörper (100) mit einer oberen Öffnung und zwei mit ihren Oberkanten die Öffnung seitlich begrenzenden, einander gegenüberliegenden Seitenwänden (110), deren Innenseiten jeweils eine oberkantennahe, längs erstreckte Deckel-Führungsnut (120) tragen, sowie
- einen plattenartigen Deckel (200) mit seitlichen, längs erstreckten Führungskanten (210), der durch deren Eingriff in die Deckel-Führungsnuten (120) des Gehäusekörpers (100) an diesem schiebegelagert ist,
wobei der Gehäusekörper (100) an der Außenseite einer der Seitenwände (110) einen parallel zu den Deckel-Führungsnuten (120) ausgerichteten Bolzen (500) trägt und der Deckel (200) eine an einer die entsprechende Seitenwand-Oberkante des Gehäusekörpers (100) überkragenden Lasche (220) fixierte, koaxial zu dem Bolzen (500) ausgerichtete Führung trägt, die den Bolzen (500) unter Bildung einer rotativ beweglichen Gleitlagerung umgreift,
wobei der Bolzen (500) lösbar am Gehäusekörper axial fixiert ist und die Führung als eine Hülse (222) ausgebildet ist, die den Bolzen (500) unter Bildung einer zusätzlichen, axial beweglichen Gleitlagerung umgreift.

2. Gehäuse nach Anspruch 1,
**dadurch gekennzeichnet,**
**dass** die Führungskanten (210) des Deckels (200) sowie die Deckel-Führungsnuten (120) des Gehäusekörpers (100) jeweils aus in Längsrichtung voneinander beabstandeten Abschnitten (212; 122) bestehen, die derart aufeinander abgestimmt sind, dass wenigstens eine Schiebeposition des Deckels (200) existiert, in der die Abschnitte (212) seiner Führungskanten (210) in intermittierender Anordnung mit den Abschnitten (122) der Deckel-Führungsnuten (122) des Gehäusekörpers (100) stehen, wobei die Führungskanten-Abschnitte (212) einerseits und die Deckel-Führungsnuten-Abschnitte (122) andererseits außer Eingriff miteinander stehen.

3. Gehäuse nach einem der vorangehenden Ansprüche,
**dadurch gekennzeichnet,**
**dass** der Bolzen (500) in zwei Augen (140, 150) gelagert ist, die in Längsrichtung beabstandet voneinander an der Außenseite der zugeordneten Seitenwand (110) des Gehäusekörpers (100) angeordnet sind.

4. Gehäuse nach Anspruch 3,
**dadurch gekennzeichnet,**
**dass** ein erstes der Augen (140) als Durchgangsöffnung ausgebildet ist.

5. Gehäuse nach Anspruch 4,
**dadurch gekennzeichnet,**
**dass** das zweite Auge (150) als Sacköffnung ausgebildet ist.

6. Gehäuse nach Anspruch 5,
**dadurch gekennzeichnet,**
**dass** der Bolzen (500) an seinem dem zweiten Auge (150) nächstgelegenen Ende und/oder die Sacköffnung ein in Bolzenaxialrichtung federvorgespannt verschiebliches Anschlagelement (510) aufweisen.

7. Gehäuse nach einem der Ansprüche 4 bis 6,
**dadurch gekennzeichnet,**
**dass** der Bolzen (500) im Bereich seiner Lagerung im ersten Auge (140) einen radial erstreckten Vorsprung (530) aufweist und das erste Auge (140) an seiner Innenseite eine in Bolzenaxialrichtung erstreckte, korrespondiere, erste Nut (142) aufweist, deren dem zweiten Auge (150) abgewandte Stirnseite offen ist.

8. Gehäuse nach Anspruch 7,
**dadurch gekennzeichnet,**
**dass** beide Stirnseiten der ersten Nut (142) offen sind und das erste Auge (140) an seiner Innenseite eine zur ersten Nut (142) versetzte, in Bolzenaxialrichtung erstreckte, ebenfalls zu dem Radialvorsprung (530) des Bolzens (500) korrespondierende, zweite Nut (144) aufweist, deren dem zweiten Auge (150) zugewandte Stirnseite offen und deren dem zweiten Auge (150) abgewandte Stirnseite geschlossen ist.

9. Gehäuse nach einem der Ansprüche 7 bis 8,
**dadurch gekennzeichnet,**
**dass** der Bolzen (500) in seinem dem ersten Auge (140) axial vorgelagerten Endbereich einen radial abstehenden Betätigungshebel (520) aufweist.

10. Gehäuse nach einem der vorangehenden Ansprüche,
**dadurch gekennzeichnet,**
**dass** der Deckel (200) und der Gehäusekörper (100) zueinander korrespondierende Elemente eines Kugelrastmechanismus (130, 230) aufweisen, die in Verschlussstellung des Deckels (200) zur Realisierung einer lösbaren Sicherung gegen Längsverschiebung zwischen dem Deckel (200) und dem Gehäusekörper (100) miteinander wechselwirken.

## Claims

1. Valve housing for a pinch valve, comprising
- a housing body (100) with an upper opening and two opposing side walls (110) laterally bounding the opening with their upper edges, the inner sides of which walls each carry a longitudinally extending lid guide groove (120) proximate to the respective upper edge, and
- a plate-like lid (200) with lateral, longitudinally extending guide edges (210), the lid being slidingly mounted on the housing body (100) by engagement of the guide edges in the lid guide grooves (120) of the housing body,
wherein the housing body (100) carries on the outer side of one of the side walls (110) a bolt (500) aligned parallel to the lid guide grooves (120), and the lid (200) carries a guide fixed to a tab (220) projecting over the corresponding side wall upper edge of the housing body (100) and aligned coaxially with the bolt (500), the guide engaging around the bolt (500) to form a rotationally movable sliding bearing,
wherein the bolt (500) is detachably fixed axially to the housing body and the guide is formed as a sleeve (222) which engages around the bolt (500) to form an additional, axially movable sliding bearing.

2. Housing according to claim 1,
**characterized in that**
the guide edges (210) of the lid (200) and the lid guide grooves (120) of the housing body (100) each comprise sections (212; 122) longitudinally spaced apart from one another, which are matched to one another such that there is at least one sliding position of the lid (200) in which the sections (212) of its guide edges (210) are in intermittent arrangement with the sections (122) of the lid guide grooves (120) of the housing body (100), the guide edge sections (212) on the one hand and the lid guide groove sections (122) on the other hand being out of engagement with one another.

3. Housing according to any one of the preceding claims,
**characterized in that**
the bolt (500) is mounted in two eyes (140, 150) longitudinally spaced from each other on the outer side of the corresponding side wall (110) of the housing body (100).

4. Housing according to claim 3,
**characterized in that**
a first of the eyes (140) is formed as a through opening.

5. Housing according to claim 4,
**characterized in that**
the second eye (150) is formed as a blind opening.

6. Housing according to claim 5,
**characterized in that**
an end of the bolt (500) disposed closest to the second eye (150) and/or the blind opening comprises a stop element (510) configured for spring-biased displacement in an axial direction of the bolt.

7. Housing according to any one of claims 4 to 6,
**characterized in that**
the bolt (500) has a radially extended projection (530) in a region mounting the bolt in the first eye (140), and the first eye (140) has, on its inner side, a corresponding first groove (142) which extends in an axial direction of the bolt, the end face of the first groove that faces away from the second eye (150) being open.

8. Housing according to claim 7,
**characterized in that**
both end faces of the first groove (142) are open, and the first eye (140) has, on its inner side, a second groove (144) which is offset from the first groove (142), extends in the axial direction of the bolt, and also corresponds to the radial projection (530) of the bolt (500), the end face of the second groove that faces the second eye (150) being open and the end face of the second groove that faces away from the second eye (150) being closed.

9. Housing according to any one of claims 7 to 8,
**characterized in that**
the bolt (500) comprises a radially projecting actuating lever (520) in an end region disposed axially in front of the first eye (140).

10. Housing according to any one of the preceding claims, **characterized in that**
the lid (200) and the housing body (100) comprise mutually corresponding elements of a ball latch mechanism (130, 230) which interact with each other in the closed position of the lid (200) to produce a releasable securing against longitudinal displacement between the lid (200) and the housing body (100).

## Revendications

1. Carter de vanne pour une vanne à manchon, comprenant
- un corps de carter (100) avec une ouverture supérieure et deux parois latérales (110) délimitant latéralement l'ouverture avec leurs bords supérieurs, opposées l'une à l'autre, dont les faces intérieures portent respectivement une rainure de guidage de couvercle (120) proche du bord supérieur, étendue longitudinalement, ainsi que
- un couvercle (200) du type plaque avec des bords de guidage (210) latéraux, étendus longitudinalement, qui est monté coulissant par l'insertion de ceux-ci dans les rainures de guidage de couvercle (120) du corps de carter (100) sur celui-ci,
dans lequel le corps de carter (100) porte sur la face extérieure d'une des parois latérales (110) un boulon (500) orienté parallèlement aux rainures de guidage de couvercle (120) et le couvercle (200) porte un guidage fixé sur une languette (220) dépassant du bord supérieur de paroi latérale correspondant du corps de carter (100), orienté coaxialement par rapport au boulon (500), qui entoure le boulon (500) avec formation d'un palier lisse mobile en rotation,
dans lequel le boulon (500) est fixé axialement de manière détachable sur le corps de carter et le guidage est réalisé sous la forme d'un manchon (222), qui entoure le boulon (500) avec formation d'un palier lisse additionnel, mobile axialement.

2. Carter selon la revendication 1,
**caractérisé en ce**
**que** les bords de guidage (210) du couvercle (200) ainsi que les rainures de guidage de couvercle (120) du corps de carter (100) sont respectivement constitués de parties (212 ; 122) espacées l'une de l'autre dans la direction longitudinale, qui sont adaptées l'une à l'autre de telle sorte qu'au moins une position de coulissement du couvercle (200) existe, dans laquelle les parties (212) de ses bords de guidage (210) sont en disposition intermittente avec les parties (122) des rainures de guidage de couvercle (120) du corps de carter (100), dans lequel les parties (212) de bords de guidage d'une part et les parties (122) de rainures de guidage de couvercle d'autre part sont hors de prise les unes avec les autres.

3. Carter selon l'une quelconque des revendications précédentes,
**caractérisé en ce**
**que** le boulon (500) est monté dans deux œillets (140, 150), qui sont disposés de manière espacée l'un de l'autre dans la direction longitudinale sur la face extérieure de la paroi latérale (110) associée du corps de carter (100).

4. Carter selon la revendication 3,
**caractérisé en ce**
**qu'**un premier des œillets (140) est réalisé sous la forme d'une ouverture de passage.

5. Carter selon la revendication 4,
**caractérisé en ce**
**que** le deuxième œillet (150) est réalisé sous la forme d'une ouverture borgne.

6. Carter selon la revendication 5,
**caractérisé en ce**
**que** le boulon (500) sur son extrémité la plus proche du deuxième œillet (150) et/ou l'ouverture borgne présentent un élément de butée (510) coulissant de manière précontrainte par un ressort dans la direction axiale de boulon.

7. Carter selon l'une quelconque des revendications 4 à 6,
**caractérisé en ce**
**que** le boulon (500) présente dans la zone de son montage dans le premier œillet (140) une saillie (530) étendue radialement et le premier œillet (140) présente sur sa face intérieure une première rainure (142) correspondante, étendue dans la direction axiale de boulon, dont la face frontale opposée au deuxième œillet (150) est ouverte.

8. Carter selon la revendication 7,
**caractérisé en ce**
**que** les deux faces frontales de la première rainure (142) sont ouvertes et le premier œillet (140) présente sur sa face intérieure une deuxième rainure (144) décalée de la première rainure (142), étendue dans la direction axiale de boulon, correspondant également à la saillie radiale (530) du boulon (500), dont la face frontale tournée vers le deuxième œillet (150) est ouverte et dont la face frontale opposée au deuxième œillet (150) est fermée.

9. Carter selon l'une quelconque des revendications 7 à 8,
**caractérisé en ce**
**que** le boulon (500) présente dans sa zone d'extrémité située axialement en avant du premier œillet (140) un levier d'actionnement (520) faisant saillie radialement.

10. Carter selon l'une quelconque des revendications précédentes,
**caractérisé en ce**
**que** le couvercle (200) et le corps de carter (100) présentent des éléments correspondant les uns aux autres d'un mécanisme d'encliquetage à billes (130, 230), qui interagissent les uns avec les autres dans la position de fermeture du couvercle (200) pour la réalisation d'un blocage libérable empêchant un coulissement longitudinal entre le couvercle (200) et le corps de carter (100).
